# EUROPEAN PATENT APPLICATION

(11) **EP 4 682 748 A1**
(43) Date of publication of application: **21.01.2026**
(21) Application number: 24306221.3
(22) Date of filing: 19.07.2024
(51) Int. Cl.: G06F 21/50, H04L 9/40

(54) **METHOD AND APPARATUS FOR CLOSED-LOOP AUTOMATED PROCEDURE FOR IMPROVING THE RESILIENCE OF CRITICAL INFRASTRUCTURES**

(71) Applicant: Montimage, 75013 Paris (FR)
(72) Inventor: MONTES DE OCA, Edgardo, 75013 PARIS (FR); NGUYEN, Manh Dung, 94260 FRESNES (FR); LA, Vinh Hoa, 78800 HOUILLES (FR)
(74) Representative: Santarelli

(57) **Abstract**

A method (300) for improving the resilience of a Critical Infrastructure (CI) (101), the method (300) being implemented in a system (100) for monitoring the Cl (101), the method (300) comprising:
- collecting (301) real-time data comprising at least data from an Internet of Things (IoT) network (103) of the Cl (101);
- identifying anomaly and recognizing threat (3042) using trained machine learning (ML) models, from the real-time data collected and by a detection and root cause analysis component (DRCA) (110) of the system (100);
- informing (305) a reaction component (112) of the system (100), by the DRCA (110);
- determining (306), by the reaction component (112), actions to mitigate the recognized threat;
- informing (307) a security orchestrator component (114) of the system (100) of the threat; and
- executing (3081) actions to mitigate the recognized threat, by the security orchestrator component (114), in the Cl (101).

## Description

### FIELD OF THE INVENTION

The present disclosure concerns the domain of system resilience.

More particularly the present disclosure concerns a closed-loop automated procedure that improves the resilience of any Critical Infrastructure based on communicating entities and Internet of Things (IoT) networks incorporating sensors.

A closed-loop procedure architecture to identify, analyse and cope with various cyber threats scenarios in an autonomous manner is disclosed.

A flexible architecture for the integration into Development and Operation cycles that makes it useful for various security testing scenarios such as performance testing, scalability testing and penetration testing, is disclosed.

The present disclosure has a direct application in the monitoring of complex connected systems to improve their security and resiliency against cyber-physical, cyber-security attacks, malfunctions, and natural hazards.

### BACKGROUND OF INVENTION

Nowadays, major sectors such as, for example, transport, electricity, finance, telecommunications, as well as oil and gas, are essential for the daily functioning of society. According to the European Commission (Directive 2008/114/EC), critical infrastructures are *"an asset, system or part thereof located on EU territory, which is essential for the maintenance of vital societal functions, health, safety, security, economic or wellbeing of people, and the disruption or destruction of which would have a significant impact on at least two Member States, as result of the failure to maintain those functions".*

With the exponential growth of Internet of Things, loT, more and more smart, connected devices are being used in critical infrastructures to improve operational efficiency, provide real-time monitoring, enhance security measures, and enable predictive maintenance. An loT device is an autonomous device with a sensor that detects external parameters and/or an actuator to automatically take the necessary corrective action, a transceiver for transmitting/receiving data, and a microcomputer to handle the data processing.

The importance of critical infrastructures is underscored by the potential consequences of failure to the safety and well-being of the community. As critical infrastructures become increasingly connected, automated, and software-driven, they also become increasingly vulnerable. Threats such as cyber-physical attacks, human surveillance, malicious actions, and even natural hazards pose significant risks. Moreover, the disruption can cause a domino effect, affecting even infrastructures that are not directly linked to the original disruption event. As a result, security and resilience are therefore principal concerns for the design and construction of modern critical infrastructures. Self-protection is becoming increasingly important and has been identified as one of the essential properties of self-management for critical infrastructures.

Moreover, existing solutions are limited to analysing historical data to identify unusual patterns when compared with real-time data. This means that architecture of existing solutions do not allow injecting artificial data in a system on production for training it to new types of threats, or to study how it might react to new threats. Indeed, existing solutions are limited to simulating behaviours in a development environment, not in a production environment, which inevitably leads to discrepancies in the results and side-effects.

### SUMMARY OF THE INVENTION

The present invention has been devised to address one or more of the foregoing concerns. It concerns a generic self-protection solution that automates the management of the loTs, including monitoring and simulation, threat analysis and identification, threat mitigation, to improve their security and resiliency against cyber-physical, cyber-security attacks and malfunctions. Often, critical infrastructures are complex, with various interconnected components and systems. To deal with this complexity, this invention relies on two different concepts: digital twins and root cause analysis.

A digital twin is a digital model of an intended or actual real-world physical product, system, or process (a physical twin) that serves as the effectively indistinguishable digital counterpart of it for practical purposes, such as simulation, integration, testing, monitoring, and maintenance.

Digital twins provide a holistic view by modelling the infrastructure virtually. This facilitates a comprehensive understanding of how different elements interact and impact one another. Detection and Root Cause Analysis, DRCA, further assists in deciphering the underlying causes of issues, ensuring a thorough grasp of the system's intricacies. According to an aspect of the invention it is proposed a method for improving the resilience of a Critical Infrastructure (CI), the method being implemented in a system for monitoring the Cl, the method comprising:
- collecting real-time data comprising at least data from an Internet of Things network of the Cl;
- identifying anomaly and recognizing threat using trained machine learning (ML) models, from the real-time data collected and by a detection and root cause analysis component (DRCA) of the system;
- informing a reaction component of the system, by the DRCA;
- determining, by the reaction component, actions to mitigate the recognized threat;
- informing a security orchestrator component of the system of the threat; and
- executing actions to mitigate the recognized threat, by the security orchestrator component, in the Cl.

In an embodiment, the method further comprises training ML models.

In an embodiment, the method further comprises simulating behaviours of the Cl, by a test and simulation component of the system including at least one digital twin, a digital twin being a software simulation module of an loT device of the Cl.

In an embodiment, the method further comprises generating simulated data for training machine learning models to detect and identify threats.

In an embodiment, a collected dataset provided to the DRCA for identifying anomaly and recognizing threat, comprises the real-time data previously collected and stored in a real-time data store of the system.

In an embodiment, the collected dataset provided to the DRCA for identifying anomaly and recognizing threat, comprises data stored in an historical data store of the system. In an embodiment, the method further comprises an interacting between the security orchestrator component and the test and simulation component by means of a least one digital twin.

According to another aspect of the invention it is proposed a system for improving the resilience of a Critical Infrastructure (CI), the system implementing a method according to the invention, the system comprising:
- a monitor component configured to monitor an environment of the Cl using an Internet of Things (IoT) network to collect real-time data;
- a real-time data store for storing the collected real-time data;
- a detection and root cause analysis component (DRCA) configured to analyse the collected real-time data to recognize threats;
- a reaction component configured to determine actions to mitigate threats recognized by the DRCA;
- a security orchestrator component configured to execute the determined actions to modify the CI system's logic at runtime or manage the loT network and actuators in response to the threats; and
- a test and simulation component including at least one digital twin configured to simulate behaviours of the CI to generate simulated data for training machine learning models to detect and identify threats.

In an embodiment, the system comprises a historical data store for storing historical data, including simulated data representing cyber-attacks or known CI or loT network malfunctions.

In an embodiment of the system, the DRCA utilizes machine learning models trained with historical data from the historical data store to identify similarities between current and previously observed threats.

In an embodiment, the reaction component is configured to act as a decision engine to provide mitigation plans and actions based on rules or artificial intelligence-driven algorithms.

In an embodiment of the system, the test and simulation component comprises:
- a simulator component for replicating behaviours, characteristics, and interactions of the loT network in a digital twin environment;
- a data mutation component for applying mutation functions to historical data to generate diverse testing datasets;
- a regular and malicious data generator for generating datasets to simulate normal and abnormal loT devices behaviours; and
- a data modelling and automation test generator for automatically generating data models and testing datasets based on descriptions of the Cl.

In an embodiment of the system, a modelling language such as the Topology and Orchestration Specification for Cloud Applications (TOSCA) standard is used for modifying system logic through actuators and/or managing the loT network.

According to another aspect of the invention it is proposed a computer program product for a programmable apparatus, the computer program product comprising a sequence of instructions for implementing a method according to the invention, when loaded into and executed by the programmable apparatus.

According to another aspect of the invention it is proposed a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Embodiments of the invention will now be described, by way of example only, and with reference to the following drawings in which:
**Figure 1** illustrates a block diagram of an overall system architecture for improving the resilience of critical infrastructure, according to a particular mode of the invention.
**Figure 2** illustrates a block diagram of a test and simulation component of the system, according to a particular mode of the invention.
**Figure 3** illustrates a flowchart of an example of a method for detecting the presence of an anomaly in the critical infrastructure, and the implementation of appropriate solutions.
**Figure 4** illustrates a block diagram of a computer system implementing a client application, according to an embodiment of the invention.

### DETAILED DESCRIPTION OF THE INVENTION

We consider the computational aspect of critical infrastructures in this document. Independently of the actual critical infrastructure function, from a computing point of view, a critical infrastructure may be viewed as a Central Software Infrastructure connected to and interacting with an loT network. For example, a nuclear plant may be composed, computationally speaking, of the central software controlling the plant connected to a set, or network, of loT devices for obtaining temperatures or pressure values of different elements of the plant and actuators for controlling the opening of valves.

The loT network may be subject to malfunction or the target of attacks from malicious people or bots. Indeed, the loT network does not always offer the same level of security and/or may be easier to attack due to their geographical dissemination through the critical infrastructure.

Thus, the potential applications of the invention include:
- the detection of misbehaving loT networks, such as Denial of Service attacks, or low battery status. In this case, different kind of actions can be performed, such as shutting down the misbehaving device, blocking or ignoring its messages, performing cyber-physical actions using actuators (activating a video camera for further analysis, switching off a subsystem of the Cl, etc.);
- the activation of alternative loT networks to replace misbehaving devices;
- the use of neighbouring devices from loT networks to confirm or invalidate the potentially misbehaving device;
- the detection of cascading effects of loT networks, and application of appropriate reactions to adjacent loT networks;
- scalability and resilience testing of existing gateways collecting data from multiple loT networks placed in different systems, such as connected and autonomous vehicles or in intelligent transportation systems.

This approach facilitates risk assessment and pre-emptive measures in the realm of loT network security, thereby ensuring more robust and reliable system performance even before full deployment.

A further aspect of the invention concerns a method for collecting data from a real system that is mutated to obtain different datasets, and to:
- automatically generate datasets from the collected data that can be used for training machine learning algorithms;
- allow the coexistence of digital twins and real devices to generate larger datasets and enable improved control of the virtual device behaviour to generate different test scenarios;
- formalise the data modelling to be able to automatically or manually modify and replay testing scenarios. In this way, new operators or engineers can practise on the digital twins to gain experience before working with the actual system.

The present invention is mainly based on the MAPE-K model proposed by IBM in 2001, which consists of four main conceptual functions (Monitor, Analyse, Plan and Execute) for monitoring a system. The MAPE-K model distributes tasks to each function in a loop manner and leverages a common knowledge base to characterise the self-protection property. Also, the MAPE-K model, a self-protection system is logically structured into two principal elements: a system logic and a self-protection logic. By introducing digital twins to test and simulate the system, it is possible to train machine learning models with different data to achieve a high level of resilience in critical infrastructures.

To sum-up, an automated closed loop orchestration to improve the resilience of critical infrastructures, extended with digital twins, based on the detection of malfunctions and the root-cause analysis, is disclosed.

Advantageously, the present invention also relates to a component that offers the capability of detecting and determining the root causes of detected anomalies and the capability of performing automated mitigation and remediation actions in a closed-loop manner.

In the remainder of this document, the term "anomaly" is to be understood in its broadest sense.

Anomalies include technical anomalies, abnormal fluctuations in traffic, unauthorized connections, unusual data transfer rates, computer or hardware attacks, etc.

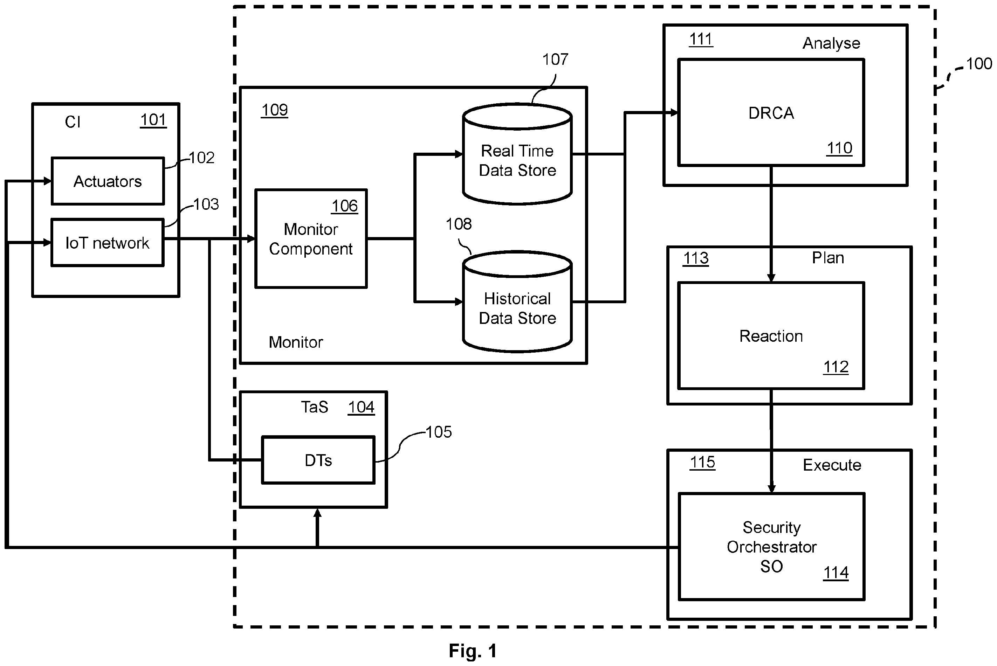

**Figure 1** is a block diagram of an example of an overall system 100 architecture according to a particular mode of the invention, showing the four main functions of the overall system **100** architecture.

The system **100** mainly comprises a monitor function **109,** an analyse function **111,** a plan function **113** and an execute function **115.** In addition, the system **100** comprises a test and simulation component **104** that includes at least one digital twin **105.** A critical infrastructure **101,** including actuators **102** and an loT network **103,** is shown in Figure 1. In a preferred embodiment, actuators **102** and loT network **103** are deployed and run in Docker containers (not shown here).

The monitor function **109** comprises a monitor component **106** which monitors the environment of the critical infrastructure **101** using the loT network **103** for collecting real-time data. Also, the monitor component **106** is able to collect simulated data from the digital twin **105.** All these data are stocked in a real time data store **107** for analysing, testing and simulating.
Simulated data from the digital twin **105** can also contain abnormal behaviours previously injected by the digital twin **105** which represent cyber-attacks or known critical infrastructure **101** or loT network **103** malfunctions. Those simulated data are stocked in an historical data store **108.**

The analyse function **111** comprises a detection and root cause analysis component **110,** DRCA, which analyses the collected data from the real time data store **107** for predicting anomalous behaviours. As examples, the DRCA **110** is in charge of gathering, extracting and processing data for identifying system incidents. Also, the DRCA **110** calculates similarities between an incident and previously observed ones. So, one aspect of the analyse function **111** is to identify the type of attacks and/or hardware malfunctions suffered by critical infrastructures **101.** Another aspect of the analyse function **111** is to identify the attacking, attacked or malfunctioning nodes. When an anomaly is identified, an alert is raised with the aim of resolving it, either automatically by the DCRA **110** or through the action of a human operator.

The plan function **113** comprises a reaction component **112** and is in charge of determining the necessary actions to react against the anomaly identified by the DRCA **110.** The reaction component **112** receives alerts raised by the analyse function **111.** Depending on the identified anomaly, the reaction component **112** acts as a decision engine that will provide mitigation plans and actions for neutralising the detected anomaly if necessary. Also, the reaction component **112** can be designed and implemented as a hierarchical rule-based decision tree. In another embodiment, the reaction component **112** can be designed and implemented as an Artificial Intelligence-driven decision engine. Designs and implementations of the reaction component depend on the specific use cases and also the amount of historical data available for training AI (Artificial Intelligence) models.

For use cases where logic is well understood and outputs are clear and decisions can be distilled into deterministic rules, a rule-based decision engine is preferably designed and implemented. As a non-limiting example of rules which can be set is if a misbehaving device is detected in the loT network **103,** one of the defined mitigation actions is to turn off the misbehaving device, or to block its communication. Another non-limiting example of rule which can be set is if the temperature measured by a thermometer of the loT network **103** exceeds a threshold value, a cooling system is then activated during a certain time or until the temperature measured reaches a set value. In other words, certain rules are defined so that the necessary actions are triggered when, among other things, the values obtained by the sensors of the loT network **103** exceed certain thresholds.

For use cases which are complex, or in dynamic environments, Al-based decision-making is preferably designed and implemented, using machine learning algorithms, such as recurrent neural networks (RNNs) with long-term and short-term memory (LSTM), to learn from data stored in the historical data store **108** in order to make adjustments.

Advantageously, this approach enables an active approach for detecting potential cyber-attacks, in comparison with the knowledge-based approaches described above, which can be considered passive. This means that the administrators/engineers managing the critical infrastructure **101** can define many potential scenarios of incidents that can happen in the critical infrastructure **101** and train the DRCA component **110.**

Additionally, the selection of metrics that characterise incidents is performed using advanced machine learning-based feature selection techniques, ensuring a sophisticated and dynamic approach to incident detection. In the critical infrastructure 101 context, various metrics and features can be considered for monitoring and detection. Some examples of metrics and features are tabulated in Table 1.

**Table 1. Examples of metrics and features used to characterise incidents**

| Type | Metric | Significance |
|---|---|---|
| Device connectivity | Number of connected devices and their types | Sudden spikes or drops in device connectivity may indicate anomalies or potential security threats |
| Data Throughput | Volume of data transmitted per unit of time | Unusual patterns in data throughput could suggest data exfiltration or a denial-of-service attack |
| Latency | Time delay in data transmission | Abnormal latency patterns may indicate network congestion, signalling potential security issues |
| Packet Loss | Percentage of data packets lost during transmission | High packet loss rates may point to network interference or malicious activities |
| Network Slice Performance | Quality of service (QoS) within specific network slices | Significance: Monitoring performance within network slices helps ensure the fulfilment of service-level agreements (SLAs) and identifies potential issues |
| Energy Consumption | Power consumption by IoT devices | Unusual energy consumption patterns may indicate compromised devices or unauthorised access |
| Anomaly Detection in Device Behaviour | Metric: Deviations from normal behaviour based on device profiles | Detecting anomalies in device behaviour can indicate potential security threats or compromised devices |
| Authentication Failures | Number of failed authentication attempts | A sudden increase in authentication failures may suggest unauthorised access attempts |
| Radio Frequency interference | Presence of unexpected RF signals | Detection of RF interference may indicate attempts to disrupt communication or compromise the network |
| Network Congestion | Level of congestion in the network | Persistent congestion may impact service quality and could be a sign of malicious activity |
| Device Location Changes | Geographical movements of devices | Unexpected device movements may indicate physical security breaches |
| Data Integrity | Checks on the integrity of transmitted data | Monitoring data integrity ensures that transmitted information has not been tampered with during transit |

These metrics and features, when monitored and analysed using advanced machine learning techniques, contribute to a comprehensive and adaptive approach to security and anomaly detection in critical infrastructure environments.

In the critical infrastructure's context, a preferred embodiment consists in using a hybrid approach which combines both rule-based and Al-based approaches. Indeed, and depending on the complexity of the system under attack detected or in which a failure is detected, the hybrid solution offers the best solution.

When the necessary actions to react against the anomaly identified by the DRCA **110** are determined, these actions are executed by the next function **115.**

The execute function **115** comprises a security orchestrator component **114.** The security orchestrator component **114** is configured with remediation strategies using a modelling language such as the Topology and Orchestration Specification for Cloud Applications (TOSCA) standard, developed by the Organization for the Advancement of Structured Information Standards (OASIS). As a non-limiting example, TOSCA standard allows to enhance the firewall of the loT network **103** by ensuring that only secure HTTPS traffic is allowed, thereby blocking the malicious traffic from detected attack nodes and reducing the potential attack surface.

An example of a simplified version of the TOSCA template is presented below. This template aims to provide a generic and adaptable framework for defining the firewall rules for strengthening the loT network **103.** It allows users to customise parameters, such as details of the firewall device, based on their specific infrastructure and preferences during instantiation. The template retains its core components, including the definition of a firewall rule, a firewall device, a security policy for strengthening the firewall security level, and a workflow for updating the firewall rules.

| |
|---|
| ```
tosca_definitions_version: tosca_simple_yaml_1_3
     description: Strengthen firewall rules for IoT networks
     metadata:
       template name: firewall strengthening
       template_version: 1.0.0
     topology_template:
       node_templates:
          firewall rule:
            type: tosca.nodes.network.FirewallRule
            properties:
              rule_name: "Block_All_Except_HTTPS"
              action: "allow"
              destination port: 443
              protocol: tcp
            requirements:
              - hosted_on: firewall_device
          firewall device:
            type: tosca.nodes.network.Firewall
            properties:
              #1 Specific details added here such as:
                  vendor, model, version
       policies:
          - strengthen firewall:
              type: tosca.policies.Security
              targets: [ firewall_rule ]
              properties:
                #2 Detailed threat_level property added here
       workflows:
         update_firewall:
            steps:
              apply_new_rule:
                target: firewall_rule
                activities:
                  - call operation:
     tosca.interfaces.node.lifecycle.Standard.create
``` |

This example TOSCA file in YAML format has the following hierarchical data structure consisting of blocks, sequences and nodes:
- *tosca_definitions_version:* Specifies the version of the TOSCA Simple YAML format being used, in this case, tosca_simple_yaml_1_3.
- *description:* Provides a brief description of the purpose of the YAML file, which is to strengthen firewall rules for loT networks.
- *metadata:* Contains metadata information about the template, including the name (template_name) and version (template_version).
- *topology_template:* Defines the structure and components of the application or service being modeled.
   ∘ *node_templates:* Describes the various nodes (components) in the topology.
      - *firewall_rule:* Specifies a firewall rule, indicating its type ('tosca.nodes.network.FirewallRule') and properties such as rule name, action, destination port, and protocol. It also defines requirements indicating that this rule should be hosted on a firewall device.
      - *firewall_device:* Specifies a firewall device, indicating its type ('tosca.nodes.network.Firewall') and potentially specifying properties like vendor, model, and version.
   ∘ *policies:* Specifies policies to be enforced on the components.
      - *strengthen_firewall:* Defines a security policy ('tosca.policies.Security') to strengthen the firewall. It targets the 'firewall_rule' and may contain additional properties related to threat levels.
   ∘ *workflows:* Describes workflows or processes to be executed.
      - *update_firewall: Represents a workflow named 'update_firewall'. It includes steps to apply a new rule to the firewall, targeting the 'firewall_rule'. The activity involves calling the 'create' operation defined in the standard lifecycle interface for nodes.*

The security orchestrator component **114** orchestrates the Docker containers that contain the actuators **102** and loT networks **103.** Mitigation actions are then executed via actuators **102** to modify the system's logic at runtime or by managing the loT networks **103** and actuators **102.** For this, the security orchestrator component **114** needs to be informed on the characteristics and topology of the actuators **102** and the loT networks **103** of the **CI 101.**

The security orchestrator component **114** also interacts with the test and simulation component **104** to extend the CI **101** by means of the digital twins **105.**

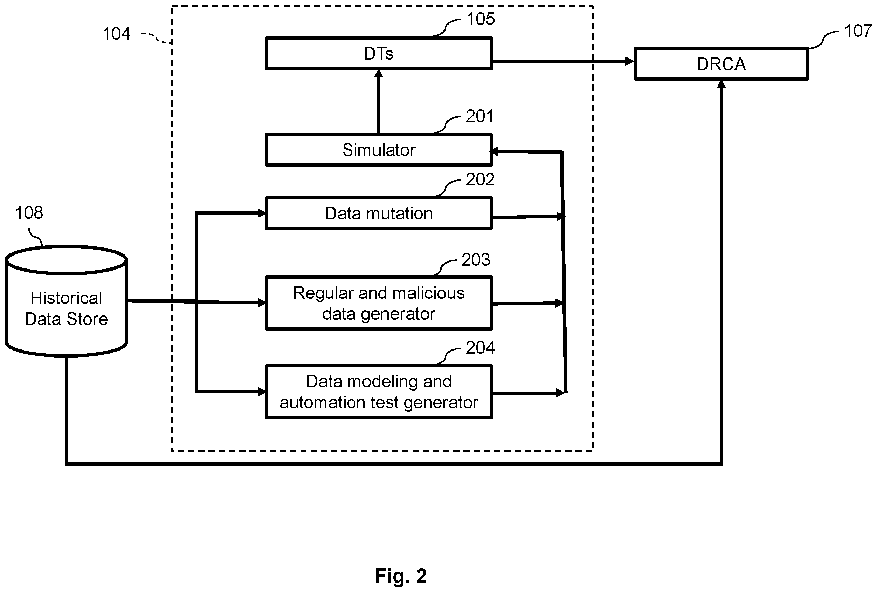

**Figure 2** is a block diagram of an example of the test and simulation component **104,** according to a particular mode of the invention. The test and simulation component **104** mainly comprises the digital twins **105** of the loT networks **103** of the critical infrastructure **101,** a simulator component **201,** a data mutation component **202,** a regular and malicious data generator **203** and a data modelling and automation test generator **204.**

As mentioned previously, the test and simulation component **104** manages the digital twins **105** that simulate the behaviour of real loT networks **103** of the critical infrastructure **101.** The test and simulation component **104** can inject abnormal behaviour so that datasets containing this abnormal behaviour can be stored in the historical data store **108.** In other words, using the test and simulation component **104,** the behaviour of the digital twins **105** is modified to simulate malfunctions and attacks using predefined configurations and models or automatically generated ones, using fuzz testing techniques for example. These datasets are then used by the DRCA **110** to learn how to detect the abnormal behaviour. In this way it is possible to simulate misbehaving loT networks **103** and learn how to detect and identify them using pattern-based identification methods, such as the similarity learning analysis.

Advantageously, digital twins **105** offer the capability to test and validate a critical infrastructure even prior to its complete deployment in the physical world or in cases where no physical loT networks **103** is yet available. Digital twins **105** are utilised in conjunction with physical systems to create a virtual counterpart that mirrors the behaviour, characteristics, and performance of the physical entities. By creating a virtual replica of the planned critical infrastructure **101,** engineers can leverage the security-related aspects at an early stage without having a complete functioning system. Here the digital twins **105** are implemented to simulate the messages generated and the command-and-control messages received by real loT network **103.** Digital twins **105** may correspond to deployed loT networks **103** or to loT networks **103** that are planned to be deployed, or a combination of the two. Thus, digital twins **105** reproduce the interaction of the real loT networks **103** with the environment, and do not need to model the internal components of devices.

In a preferably embodiment, the testing scenarios are created from three different sources which are the data mutation component **202,** the regular and malicious data generator 203 and the data modelling and automation test generator **204.**

The data mutation component **202** takes as input data the collected data from the historical data storage **108.** Then, the data mutation component **202** adds mutation functions on the data to generate a diverse testing dataset, reflecting different scenarios and conditions that the system **100** might encounter in real-world situations. The mutation function varies depending on the testing objective. For example, deletion mutations allow for the assessment of the system's response to missing or deleted events, while insertion mutations evaluate its handling of unexpected data inputs. Modification mutations assess the system's adaptability to changes in data values, and time-shift mutations simulate variations over different time periods. Furthermore, noise injection, scaling, duplication, and interpolation mutations may provide insights into the system's resilience to unpredictability, scalability, redundancy, and data continuity, respectively. Applying different types of mutation functions enables a thorough evaluation of the system's performance and reliability.

The data modelling and automation test generator **204** component also takes as input data the collected data stored in the historical data storage **108** in order to generate many different data models. Different testing dataset based on the testing objective and the description of the system are automatically generated by the data modelling and automation test generator **204,** such as inbound and/or outbound value, invalid value, abnormal value range.

The regulator and malicious data generator component **203** generates datasets for any testing scenarios in the cyber-attack field, given the difficulty of obtaining such datasets in practical loT systems. This component is instrumental in simulating various sensor behaviours, ranging from normal to abnormal conditions. For example, this component helps developers to create a testbed which contains sensor data for various scenarios, e.g., making the temperature too high or too low. It can also replicate Denial of Service (DoS) attacks, wherein the sensor floods the system with an extensive volume of data messages within a short timeframe. Additionally, it can simulate scenarios such as node failure, where the sensor ceases to send data.

Once data were generated by the data mutation component **202,** the regular and malicious data generator **203** and the data modelling and automation test generator **204,** data are **105** combining and the simulator component **201** replicates the behaviour, characteristics, and interactions of the loT network **103** in the digital twin **105** environment.

The system **100,** according to a particular mode of the invention being detailed, is described in the following text, along with the methods implemented.

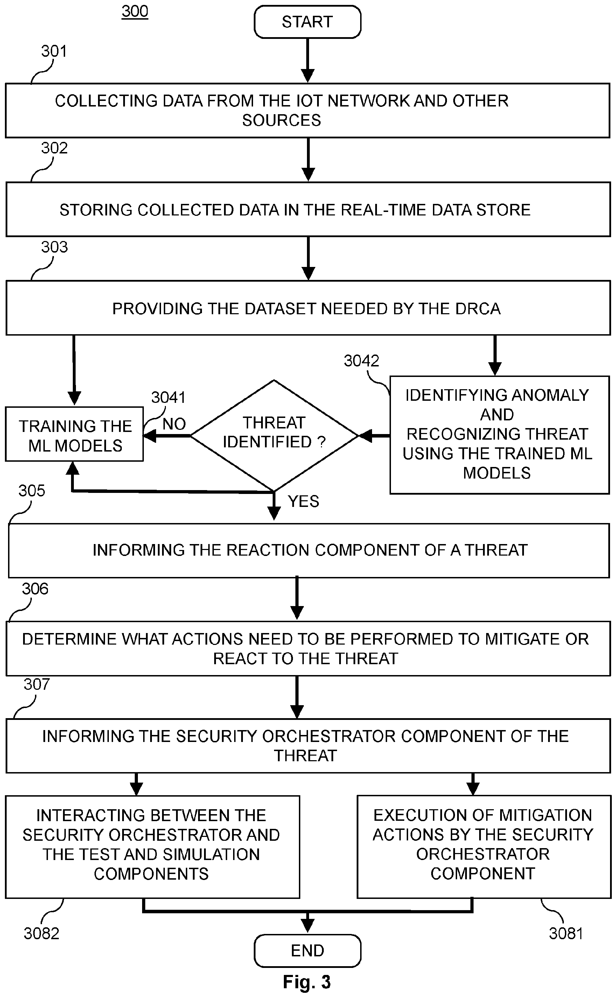

**Figure 3** is a flowchart of an example of a method **300** for determining whether an anomaly is present in the critical infrastructure **101.** Figure **3** helps to understand how data is transferred between the different components of the system **100** presented in Figure **1****.** The aim of the method **300** being to provide the real-time data to characterise the current states of the critical infrastructure **101.**

Step **301** comprises collecting data from the loT network **103** and other sources (e.g., digital twins, network traffic, application logs, server logs, system logs). Digital twins **105** and loT network **103** will generate network traffic and logs from which can be extracted the metrics or features related to system and cyber behaviour. IoT generated network traffic can be captured using a dedicated loT device acting as a network sniffer to capture the loT network's wireless communications and can be captured as Internet communications after the loT gateway. Other sources of data can also be used to extract metrics at the application level, such as captured healthcare data, image/audio/video from surveillance cameras, captured meteorological data, etc. These metrics can be used to detect anomaly in application and physical behaviour.

Step **302** comprises a storing of the collected data in the real-time data store **107.** The real-time data store **107** ensures that the digital representation remains up-to-date and accurate.

Step **303** comprises providing the dataset needed by the DRCA **110** for then trains the ML models and recognizes anomalies as real threats.

Step **3041** comprises training the ML models by exposing the digital twins **103** to examples of both normal and anomalous behaviours. Relevant data features for each incoming event are determined once data from the digital twins **105** has been labelled by the monitor component **105.** Also, the normalised values of selected features corresponding to each normal or abnormal event are calculated. Then, this data set is stored in the historical data store **108.** The goal of the normalisation step is to bring all features to a similar scale, preventing certain features from dominating the learning process due to their larger magnitudes. There are various methods of normalisation, namely Min-Max Scaling, Z-Score Normalisation, Robust Scaling, Unit Vector Scaling, Log Transformation and Softmax Scaling (for Neural Networks). The choice of normalisation method depends on the characteristics of the data and the requirements of the machine learning algorithm. It's essential to apply normalisation consistently across training and testing datasets to ensure meaningful results.

Step **3042** comprises identifying anomalies and recognizing as real threats using the trained ML models. In other words, the DRCA **110** calculates the similarities between the current (normalised) data sample with the historical (normalised) ones. For this purpose, the DRCA **110** uses similarity learning techniques, as previously mentioned, to determine the probable cause of the detected anomaly.

If a real threat is identified as similar to ones learned in the historical data store **108,** step **305** comprises informing the reaction component **112** of the threat. The reaction component **112** then determines what actions need to be performed to mitigate or react to the threat, in step **306,** and informs the security orchestrator component **114,** in step **307.** Also, the normalised data related to the currently detected anomaly can be sent back to improve the training of the ML models, in addition to the ones used in step **3041.**

If the threat is novel to the machine learning (ML) models, a continuous learning process is essential to refine the system's detection and analysis capabilities. In this context, DRCA **110** engages in ongoing learning by comparing current inputs with historical data records corresponding to normal events. Through feature analysis techniques such as Principal Component Analysis (PCA) and eXplainable Artificial Intelligence (XAI) methods, it determines the most relevant features for identifying threats. The incorporation of expert insights is invaluable: system experts' advice provides valuable feedback to label newly detected threats, and the corresponding datasets are stored in the historical data store **108.** This iterative learning process enhances the system's proficiency in accurate detection and correction as it continuously learns from new threats and their root causes. The dynamic learning approach contributes to the system's adaptability and resilience in the face of evolving and emerging threats.

Finally, in step **3081** mitigation actions are executed by the security orchestrator component **114,** through the actuators **102** or by managing the loT networks **103.** Step **3082** comprises interacting between the security orchestrator component **114** and the test and simulation component **104** to extend the critical infrastructure **101** with the digital twins **105.**

In another embodiment, corrective actions can also be carried out by human intervention. For example, for complex threats or those with unclear root causes, human operators are involved in the method **300,** and then can make informed decisions based on the information provided by the system.

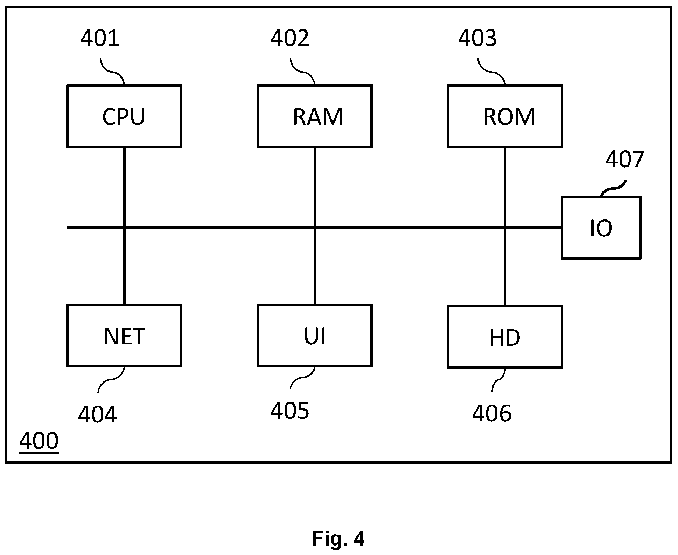

**Figure 4** is a schematic block diagram of a computing device **400** for implementation of one or more embodiments of the invention. The computing device **400** may be a device such as a micro-computer, a workstation or a light portable device. The computing device **400** comprises a communication bus connected to:
- a central processing unit **401,** such as a microprocessor, denoted CPU;
- a random access memory **402,** denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory **403,** denoted ROM, for storing computer programs for implementing embodiments of the invention;
- a network interface **404** that is typically connected to a communication network over which digital data to be processed are transmitted or received. The network interface **404** can be a single network interface or composed of a set of different network interfaces (for instance wired and wireless interfaces, or different kinds of wired or wireless interfaces). Data packets are written to the network interface for transmission or are read from the network interface for reception under the control of the software application running in the CPU **401;**
- a graphical user interface **405** may be used for receiving inputs from a user or to display information to a user;
- a hard disk **406** denoted HD may be provided as a mass storage device;
- an I/O module **407** may be used for receiving/sending data from/to external devices such as a video source or display.

The executable code may be stored either in read only memory **403,** on the hard disk **406** or on a removable digital medium such as for example a disk. According to a variant, the executable code of the programs can be received by means of a communication network, via the network interface **404,** to be stored in one of the storage means of the communication device **400,** such as the hard disk **406,** before being executed.

The central processing unit **401** is adapted to control and direct the execution of the instructions or portions of software code of the program or programs according to embodiments of the invention, which instructions are stored in one of the aforementioned storage means. After powering on, the CPU **401** is capable of executing instructions from main RAM memory **402** relating to a software application after those instructions have been loaded from the program ROM **403** or the hard-disc (HD) **406** for example. Such a software application, when executed by the CPU **401,** causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method (300) for improving the resilience of a Critical Infrastructure (CI) (101), the method (300) being implemented in a system (100) for monitoring the Cl (101), the method (300) comprising:
- collecting (301) real-time data comprising at least data from an Internet of Things (IoT) network (103) of the Cl (101);
- identifying anomaly and recognizing threat (3042) using trained machine learning (ML) models, from the real-time data collected and by a detection and root cause analysis component (DRCA) (110) of the system (100);
- informing (305) a reaction component (112) of the system (100), by the DRCA (110);
- determining (306), by the reaction component (112), actions to mitigate the recognized threat;
- informing (307) a security orchestrator component (114) of the system (100) of the threat; and
- executing (3081) actions to mitigate the recognized threat, by the security orchestrator component (114), in the Cl (101).

2. The method of claim 1, wherein the method further comprises training (3041) ML models.

3. The method of claim 1, wherein the method further comprises simulating behaviours of the Cl (101), by a test and simulation component (104) of the system (100) including at least one digital twin (105), a digital twin being a software simulation module of an loT device of the Cl (101).

4. The method of claim 3, wherein the method further comprises generating simulated data for training machine learning models to detect and identify threats.

5. The method of claim 1, wherein a collected dataset provided to the DRCA (110) for identifying anomaly and recognizing threat (3042), comprises the real-time data previously collected and stored in a real-time data store (107) of the system (100).

6. The method of claim 5, wherein the collected dataset provided to the DRCA (110) for identifying anomaly and recognizing threat (3042), comprises data stored in an historical data store (108) of the system (100).

7. The method of claim 1, wherein the method further comprises an interacting (3082) between the security orchestrator component (114) and the test and simulation component (104) by means of a least one digital twins (105).

8. A system (100) for improving the resilience of a Critical Infrastructure (CI) (100), the system (100) implementing a method (300) according to any one of claims 1 to 7, the system (100) comprising:
- a monitor component (106) configured to monitor an environment of the CI (101) using an Internet of Things (IoT) network (103) to collect real-time data;
- a real-time data store (107) for storing the collected real-time data;
- a detection and root cause analysis component (DRCA) (110) configured to analyse the collected real-time data to recognize threats;
- a reaction component (112) configured to determine actions to mitigate threats recognized by the DRCA (110);
- a security orchestrator component (114) configured to execute the determined actions to modify the Cl system's logic at runtime or manage the loT network (103) and actuators (102) in response to the threats; and
- a test and simulation component (104) including at least one digital twin (105) configured to simulate behaviours of the Cl (101) to generate simulated data for training machine learning models to detect and identify threats.

9. The system of claim 8, comprising an historical data store (108) for storing historical data, including simulated data representing cyber-attacks or known CI (101) or loT network (103) malfunctions.

10. The system of claim 9, wherein the DRCA (110) utilizes machine learning models trained furthermore with historical data from the historical data store (108) to identify similarities between current and previously observed threats.

11. The system of claim 8, wherein the reaction component (112) is configured to act as a decision engine to provide mitigation plans and actions based on rules or artificial intelligence-driven algorithms.

12. The system of claim 8, wherein the test and simulation component (104) comprises:
- a simulator component (201) for replicating behaviours, characteristics, and interactions of the loT network (103) in a digital twin (105) environment;
- a data mutation component (202) for applying mutation functions to historical data to generate diverse testing datasets;
- a regular and malicious data generator (203) for generating datasets to simulate normal and abnormal loT devices behaviours; and
- a data modelling and automation test generator (204) for automatically generating data models and testing datasets based on descriptions of the CI (101).

13. The system of claim 8, wherein a modelling language such as the Topology and Orchestration Specification for Cloud Applications (TOSCA) standard is used for modifying system logic through actuators (102) and/or managing the loT network (103).

14. A computer program product for a programmable apparatus, the computer program product comprising a sequence of instructions for implementing a method (300) according to any one of claims 1 to 7, when loaded into and executed by the programmable apparatus.

15. A computer-readable storage medium storing instructions of a computer program for implementing a method (300) according to any one of claims 1 to 7.
